# NOUVEAU FASCICULE DE BREVET EUROPEEN

(11) **EP 0 147 255 B2**
(45) Date de publication et mention de la décision concernant l'opposition: **08.06.1994**
(45) Mention de la délivrance du brevet: 03.02.1988
(21) Numéro de dépôt: 84402188.1
(22) Date de dépôt: 31.10.1984
(51) Int. Cl.: B60T 13/14

(54) **Amplificateur hydraulique de freinage**
Hydraulische Bremskraftverstärker
Hydraulic brake booster

(30) Priorité: 10.11.1983 FR 8317892
(43) Date de publication de la demande: 03.07.1985
(73) Titulaire: BENDIX France, F-93700 Drancy (FR)
(72) Inventeur: Kervagoret, Gilbert, F-95100 Argenteuil (FR); Carré, Jean-Jacques, F-93340 Le Raincy (FR); Levrai, Roland, F-95240 Stains (FR)
(74) Mandataire: Bentz, Jean-Paul

(56) Documents cités:
- DE-A- 2 933 536
- DE-A- 3 035 537
- DE-A- 3 035 576
- FR-A- 2 066 957
- FR-A- 2 221 316
- FR-A- 2 227 159
- FR-A- 2 440 854
- US-A- 3 798 905

## Description

La présente invention se rapporte aux amplifica- tures hydrauliques de freinage.

On connaît de la demande de brevet français n° 2 221 316, qui correspond au préambule de la revendication 1, un amplificateur hydraulique de freinage dit "full power" comprenant un boitier dans lequel est réalisée une chambre de travail. Dans une partie de la chambre est monté coulissant un piston moteur. Une autre partie de la chambre est pourvue d'un ensemble de valves de commande susceptible d'être actionné par un poussoir relié à la pédale de freinage. Une valve haute-pression du type à bille est associée au poussoir qui, en outre, forme un tiroir distributeur. En cours de freinage, l'actionnement du poussoir actionne le tiroir et permet le passage à un jeu de freins. En cas de panne du circuit haute pression le système décrit ci-dessus devient inopérant pour le jeu de freins, le freinage du véhicule étant assuré par un autre circuit de freinage.

L'invention a donc pour objet de proposer un amplificateur hydraulique de freinage du type dit "full power" susceptible de fonctionner comme un maître-cylindre normal en cas de panne du circuit haute pression, et qui est de construction simple, de faibles coûts de fabrication et de fiabilité accrue. Pour ce faire l'invention concerne amplificateur hydraulique de freinage comprenant un corps, un premier élément déplaçable dans le corps sous l'effet de l'actionnement d'une pédale de frein, entre une première position faisant communiquer une première chambre reliée à un circuit de freinage et à l'intérieur du corps avec un réservoir basse pression, et isolant cette chambre d'une source haute pression et une deuxième position isolant la chambre du réservoir basse pression et la faisant communiquer avec la source haute pression.

Deux modes de réalisation font l'objet des caractéristiques des revendications indépendantes 1 et 3.

D'autres caractéristiques et avantages de la présente invention ressortiront de la description suivante de deux modes de réalisation donnés à titre illustratif mais nullement limitatif, faite en relation avec les dessins annexés sur lesquels:
- la figure 1 est une vue en coupe longitudinale d'un amplificateur hydraulique pour un circuit de freinage;
- la figure 2 est une vue en coupe longitudinale de l'amplificateur hydraulique de la figure 1 dans la configuration correspondant à une panne du circuit haute pression;
- la figure 3 est une vue en coupe longitudinale d'un amplificateur hydraulique selon un deuxième mode de réalisation; et

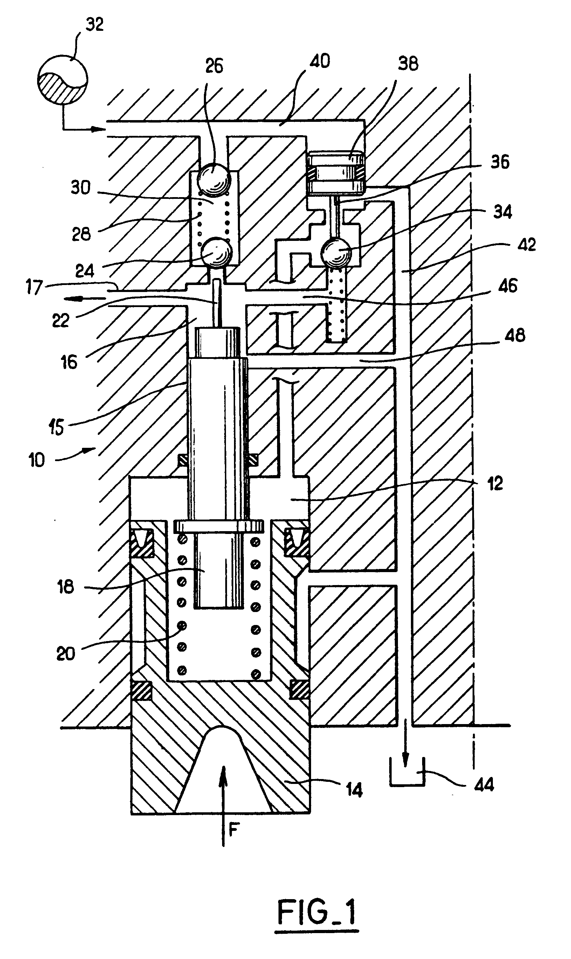

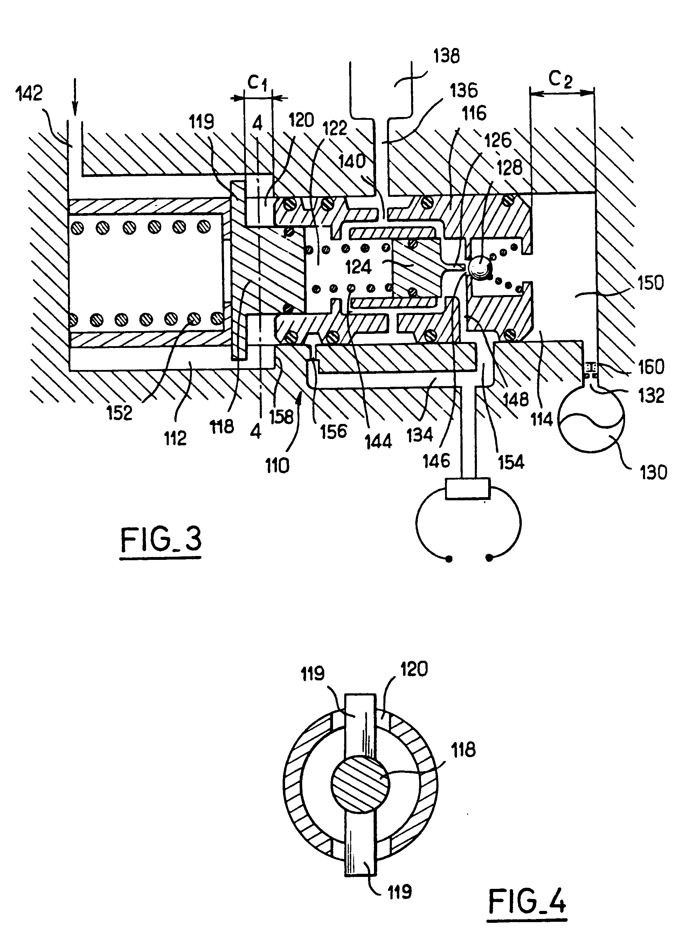

- la figure 4 est une vue en coupe latérale prise sur la ligne "4 - 4" de la figure 3. Sur la figure 1 est représentée une moitié d'un amplificateur hydraulique double, l'autre moitié (non-représentée) étant identique. L'amplificateur comprend un corps 10 dans lequel est réalisée une première chambre 16 et une deuxième chambre 12. Un piston 14 est monté coulissant dans la chambre 12. Le corps 10 est aussi pourvu d'un alésage 16 dans lequel est monté coulissant un poussoir 18 qui definit la première chambre 16. Un conduit 17 relie la chambre 16 aux freins du véhicule. Le piston 14 est susceptible d'être actionné par la pédale de frein (non-représentée) qui agit dans la direction de la fléche F. L'effort de la pédale de frein est transmis du piston 14 au poussoir 18 par un ressort 20 dont le rôle est d'assurer une certaine course de pédale.

Le poussoir 18 est pourvu, à son extrémité intérieure, d'une tige 22 destinée à ouvrir un clapet à bi Ile 24 qui est reliée a un deuxième clapet à bille 26 par un ressort 28. Les deux clapets 24 et 26 ferment un conduit 30 entre une source à haute pression de liquide hydraulique 32 et un jeu de freins du véhicule (non- représentés). L'amplificateur comporte en outre, un troisième clapet à bille 34 aasocié par une tige 36, à un piston 38. Le piston 38 se déplace dans la position illustrée sur la figure 1 sous l'effet de la pression du liquide hydraulique de la source 32 qui passe par un conduit 40 avec lequel communique le conduit 30. Dans la position normale de fonctionnement illustrée, le clapet 34 ouvre un conduit 42 entre la chambre de pression 12 et un réservoir 44 (non-représenté), et ferme un conduit 46 entre la deuxième chambre 12 et les freins via la première chambre 16.

Pendant la mise en oeuvre de l'amplificateur illustré, un effort appliqué par la pédale de frein sur le piston 14 est transmis au poussoir 18 par le ressort 20. En se déplaçant, le poussoir 18 ferme un conduit 48 qui mène au conduit 42 et la tige 22 ouvre le clapet à bille 24 contre l'effet du ressort 28. La pression du liquide hydraulique ouvre le clapet 26 et le liquide passe par conduit 30 vers les freins.

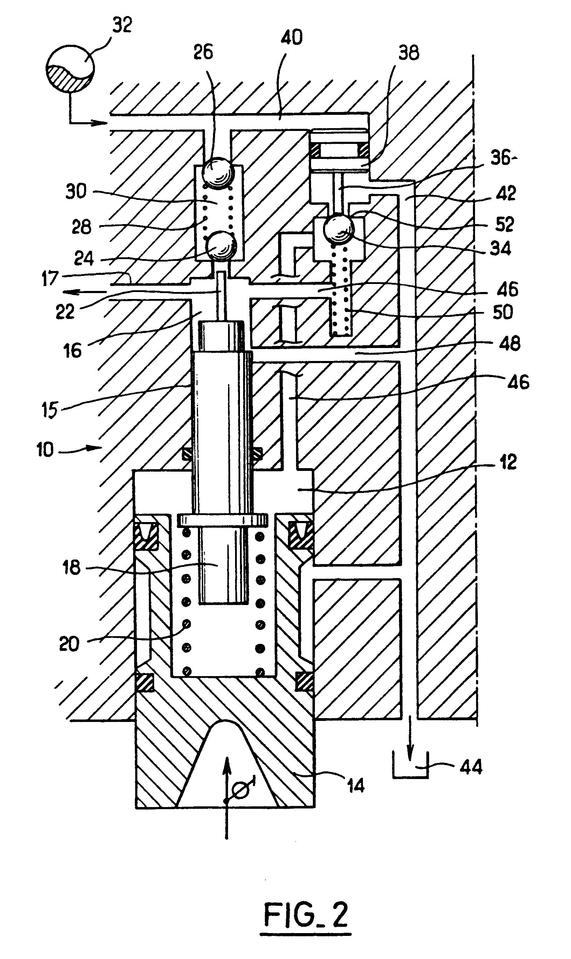

Sur la figure 2 est représenté l'amplificateur de la figure 1 en cas de panne de la source à haute pression 32. La réduction de pression du liquide dans le conduit 40 permet au piston 38 de se déplacer sous l'effet d'un ressort 50 dans la position illustrée. Dans cette position la bille 34 prend appui contre le siège 52 et ainsi ferme le conduit entre la chambre 12 et le reservoir 44. Ce déplacement de la bille 34, ouvre en outre le conduit 46 ontro la deuxième chambre 12 et les freins via la première chambre 16. Le piston 14 devient, ainsi, piston d'un maitre-cylindre classique. Le déplacement du piston 14 sous l'effort de la pédale de frein déplace également le poussoir 18 pour que ce dernier ferme le cconduit 48. Même si la tige 22 ouvre le clapet à bille 24, le conduit 30 reste fermé par le clapet 26. La pression hydraulique générée dans la chambre 12 par le piston 14 passe par le conduit 46 vers les freins.

Sur la figure 3 est représenté un deuxième mode de réalisation d'amplificateur hydraulique qui comprend un corps 110 dans lequel est realisée une première chambre 117 et une diuxième chambre 112. Le corps 10 est pourvu d'un alésage 114 dans lequel est monté coulissant un piston primaire 116. Un piston secondaire 118 qui comporte deux bras 119 est monté dans une ouverture 120 dans le piston primaire 116 et est partiellement reçu à coulissement dans un alésage secondaire 122 à l'intérieur du piston secondaire (voir la figure 4). Egalement monté à coulissement dans l'alésage secondaire 122 est amenagé un poussoir 124 qui définit la première chambre 117 et est pourvu d'une tige 126 destinée à ouvrir un clapet à bille 128 monté, dans le piston 116 et sollicité en fermeture parun ressort. Une source à haute pression 130 de liquide hydraulique est reliée a l'alésage 114 par un conduit 132. Un conduit bifurqué 134 mène de l'alésage 114 aux freins du véhicule et un troisième conduit 136 mène de l'alésage 114 à un réservoir basse-pression. Le piston primaire 116 est pourvu d'un canal bifurqué 140 qui relie deux zones axialement séparées de l'alésage secondaire 122 et qui est en communication avec le conduit 136. L'amplificateur illustré est connecté à un maitre-cylindre classique (non-représenté) par un conduit 142.

Pendant la mise en oeuvre de l'amplificateur illustré, le liquide sous pression du maitre-cylindre passe par le conduit 142 et exerce un effort sur le piston secondaire 118 qui est transmis sur le distributeur 124 par l'intermédiaire d'un ressort 114. Le distributeur 124 se déplace vers la droite en regardant la figure et la tige 126 prend appui contre la bille 128 et la déplace de son siège 146. Lors de son déplacement, le distributeur 124 isole le canal 140 et donc le conduit 136 de retour vers le réservoir. L'ouverture du clapet à bille 128 distribue la pression de la source 130 via un orifice 148 et le conduit 134 vers les freins. L'accroissement de pression frein sur le distributeur 124 se répercute, par le ressort 144 et le piston 118 sur la pression dans le maitre-cylindre. Au relâchement de l'effort sur la pédale de frein, la pression dans le maitre-cylindre décroît, le distributeur 124 recule et redécouvre le canal 140 qui permet la vidange du liquide vers le réservoir 138 et le relâchement des freins. Le déplacement du piston 118 contre le ressort 144 provoque une consommation de liquide et crée une course artificielle C de la pédale.

En cas de panne de la source à haute pression, la pression chute dans la région 150 de l'alésage 114 et le piston primaire 118 se déplace vers la droite en regardant la figure sous l'effet d'u ressort 152. En se déplaçant le piston 116 ferme un orifice 154 du conduit 134 et ouvre l'autre orifice 156 du conduit 134 faisant communiquer la deuxième chambre 112 avec les freins. Les deux bras 119 du piston secondaire 118 viennent buter sur un épaulement 158 du corps 110. A partir de ce moment les freins sont alimentés directement par le maitre-cylindre de façon manuelle classique, le fluide passant par le conduit 142 la chambre 112, l'orifice 158 et le conduit 134.

Pour avoir une assistance, lors du fonctionnement hydrostatique le piston secondaire 118 a un dia- métre supérieur à celui du distributeur 124. On prévoira avantageusement un clapet anti-retour 180 dans le conduit d'amenée de fluide sous pression 132.

## Revendications

1. Amplificateur hydraulique de freinage comprenant un corps (10), un premier élément (18) déplaçable dans le corps (10) sous l'effet de l'actionnement d'une pédale de frein, entre une première position faisant communiquer une première chambre (16) reliée à un circuit de freinage et à l'intérieur du corps (10) avec un réservoir basse-pression (44), et isolant cette chambre (16) d'une source haute-pression (32) et une deuxième position isolant la chambre (16) du réservoir basse-pression (44) et la faisant communiquer avec la source haute-pression (32), caractérisé en ce qu'il comprend une deuxième chambre (12) formée dans le corps (10) et normalement reliée audit réservoir, mais capable de fonctionner comme une chambre d'un maitre-cylindre classique en cas de défaillance de la source haute pression, un circuit (46) capable de faire communiquer cette deuxième chambre (12) avec les freins étant normalement fermé par un moyen de clapet (34) sensible à la pression de la source haute-pression (32), le moyen de clapet (34) ouvrant le circuit (46) en cas de défaillance de la source haute pression (32), et en ce que le premier élément (18) est couplé par un ressort (20) à un deuxième élément (14) actionnable directement par la pédale de frein, ledit ressort (20) assurant une course de pédale en fonctionnement normal.

2. Amplificateur hydraulique selon la revendication 1, caractérisé en ce que le deuxième élément (14) coulisse dans la deuxième chambre (12) et forme piston de maitre-cylindre.

3. Amplificateur hydraulique de freinage comprenant un corps (110), un premier élément (124) déplaçable dans le corps (110) sous l'effet de l'actionnement d'une pédale de frein, entre une première position faisant communiquer une première chambre (117) reliée à un circuit de freinage et à l'intérieur du corps (110) avec un réservoir basse-pression et isolant cette chambre d'une source haute-pression (130) et une deuxième position isolant la chambre du réservoir basse-pression (138) et là faisant communiquer avec la source haute-pression (130) caractérisé en ce qu'il comprend une deuxième chambre (112) formée dans le corps (110) et connectée à une chambre d'un maître-cylindre, un circuit (134) capable de faire communiquer cette deuxième chambre (112) avec les freins étant normalement fermé par un moyen de clapet (116) sensible à la pression de la source haute-pression (130), le moyen de clapet (116) ouvrant le circuit (134) en cas de défaillance de la source haute-pression (130), en ce que le premier élément (124) est couplé par un ressort (144) à un deuxième élément (118) actionnable indirectement par la pédale de frein, et en ce que les premier et deuxième éléments (124, 118) coulissent dans un piston (116) formant le moyen de clapet.

4. Amplificateur hydraulique selon la revendication 4, caractérisé en ce que le deuxième élément (118) est un piston actionné par le maitre-cylindre.

## Patentansprüche

1. Hydraulischer Bremskraftverstärker mit einem Gehäuse (10), einem ersten Bauteil (18), das in dem Gehäuse (10) unter der Wirkung einer Betätigung eines Bremspedals verschiebbar ist zwischen einer ersten Stellung, in der eine mit einem Bremskreis und im Inneren des Gehäuses (10) verbundene erste Kammer (16) mit einem Niederdruckspeicher (44) in Verbindung gebracht und diese Kammer (16) von einer Hochdruckquelle (32) getrennt ist, und einer zweiten Stellung, in der die Kammer (16) vom Niederdruckspeicher (44) getrennt und mit der Hochdruckquelle (32) verbunden ist, dadurch gekennzeichnet, daß er eine zweite Kammer (12) aufweist, die in dem Gehäuse (10) gebildet und normalerweise mit dem Speicher verbunden ist, die aber in der Lage ist, bei einem Ausfall der Hochdruckquelle wie eine Kammer eines herkömmlichen Hauptzylinders zu arbeiten, wobei ein Kreis (46), der diese zweite Kammer (12) mit den Bremsen verbinden kann, normalerweise durch ein Ventil (34) geschlossen ist, das auf den Druck der Hochdruckquelle (32) anspricht, wobei das Ventil (34) den Kreis (46) bei einem Ausfall der Hochdruckquelle (32) öffnet, und daß das erste Bauteil (18) über eine Feder (20) mit einem zweiten Bauteil (14) gekoppelt ist, das direkt vom Bremspedal betätigbar ist, wobei die Feder (20) beim normalen Betrieb einen Pedalweg gewährleistet.

2. Hydraulischer Verstärker nach Anspruch 1, dadurch gekennzeichnet, daß das zweite Bauteil (14) in der zweiten Kammer (12) gleitet und einen Hauptzylinderkolben bildet.

3. Hydraulischer Bremskraftverstärker mit einem Gehäuse (110), einem ersten Bauteil (124), das in dem Gehäuse (110) unter der Wirkung einer Betätigung eines Bremspedals verschiebbar ist zwischen einer ersten Stellung, in der eine mit einem Bremskreis und im Inneren des Gehäuses (110) verbundene erste Kammer mit einem Niederdruckspeicher in Verbindung gebracht und diese Kammer von einer Hochdruckquelle (130) getrennt ist, und einer zweiten Stellung, in derdie Kammer vom Niederdruckspeicher (138) getrennt und mit der Hochdruckquelle (130) verbunden ist, dadurch gekennzeichnet, daß er eine zweite Kammer (112) aufweist, die in dem Gehäuse (110) gebildet und mit einer Kammer eines Hauptzylinders verbunden ist, wobei ein Kreis (134), der diese zweite Kammer (112) mit den Bremsen verbinden kann, normalerweise durch ein Ventil (116) geschlossen ist, das auf den Druck der Hochdruckquelle (130) anspricht, wobei das Ventil (116) den Kreis (134) bei einem Ausfall der Hochdruckquelle (130) öffnet, daß das erste Bauteil (124) über eine Feder (144) mit einem zweiten Element (118) gekoppelt ist, das indirekt vom Bremspedal betätigbar ist, und daß das erste Element (124) und das zweite Element (118) in einem Kolben (116) gleiten, der das Ventil bildet.

4. Hydraulischer Verstärker nach Anspruch 3, dadurch gekennzeichnet, daß das zweite Bauteil (118) ein vom Hauptzylinder betätigter Kolben ist.

## Claims

1. Hydraulic brake booster comprising a body (10), a first component (18) capable of being displaced in the body (10) under the effect of the operation of a brake pedal, between a first position, causing a first chamber (16) joined to a braking circuit and to the interior of the body (10) to communicate with a low-pressure reservoir (44), and isolating this chamber (16) from a high-pressure source (32), and a second position isolating the chamber (16) from the low-pressure reservoir (44) and causing it to communicate with the high-pressure source (32), characterized in that it comprises a second chamber (12) formed in the body (10) and normally joined to the said reservoir but capable of functioning like a chamber in a conventional master cylinder in the event of failure of the high-pressure source, a circuit (46) capable of causing this second chamber (12) to communicate with the brakes normally being shut by a valve means (34) responsive to the pressure of the high-pressure source (32) , the valve means (34) opening the circuit (46) in the event of failure of the high-pressure source (32), and in that the first component (18) is linked by a spring (20) to a second component (14) capable of being operated directly by the brake pedal, the said spring (20) ensuring a pedal travel in normal operation.

2. Hydraulic booster according to Claim 1, characterized in that the second component (14) slides in the second chamber (12) and forms the piston of a master cylinder.

3. Hydraulic brake booster comprising a body (110), a first component (124) capable of being displaced in the body (110) under the effect of the operation of a brake pedal, between a first position, causing a first chamber joined to a braking circuit and to the interior of the body (110) to communicate with a low-pressure reservoir, and isolating this chamber from a high-pressure source (130), and a second position isolating the chamber from the low-pressure reservoir (138) and causing it to communicate with the high-pressure source (130), characterized in that it comprises a second chamber (112) formed in the body (110) and connected to a chamber in a master cylinder, a circuit (134) capable of causing this second chamber (112) to communicate with the brakes normally being shut by a valve means (116) responsive to the pressure of the high-pressure source (130), the valve means (116) opening the circuit (134) in the event of failure of the high-pressure source (130), in that the first component (124) is linked by a spring (144) to a second component (118) capable of being operated indirectly by the brake pedal, and in that the first and second components (124, 118) slide in a piston (116) forming the valve means.

4. Hydraulic booster according to Claim 3, characterized in that the second component (118) is a piston operated by the master cylinder.
